# EUROPEAN PATENT APPLICATION

(11) **EP 4 575 617 A1**
(43) Date of publication of application: **25.06.2025**
(21) Application number: 23307318.8
(22) Date of filing: 21.12.2023
(51) Int. Cl.: G02C 7/08

(54) **ACTIVE OPTICAL SYSTEM FOR AN OPHTHALMIC SPECTACLE LENS OR FOR AN AUGMENTED REALITY DEVICE AND METHOD FOR ADJUSTING OPTICAL POWER THEREOF**

(71) Applicant: Essilor International, 94220 Charenton-Le-Pont (FR)
(72) Inventor: BOUCHIER, Aude, 31000 Toulouse (FR); SEVENO, Lucie, 31400 Toulouse (FR)
(74) Representative: Jacobacci Coralis Harle

(57) **Abstract**

The invention concerns an active optical system (100) for an ophthalmic spectacle lens or for an augmented reality device.

According to the invention, the active optical system (100) comprises a base lens (10) and a stacked structure, the stacked structure comprising at least one active diffractive phase lens (20) having a variable optical power with a minimum optical power variation of at least 0.25 diopter, the stacked structure having a variable total optical power, said active diffractive phase lens presenting in cross-section a plurality of discrete phase levels (21, 22, 23, 24) and activation means (30) for varying the variable optical power of said at least one active diffractive phase lens, the variable total optical power of the stacked structure varying continuously over a determined optical power range or having at least three different values in the determined optical power range, said stacked structure having a total thickness lower than 1 mm.

## Description

### TECHNICAL FIELD OF THE INVENTION

The invention relates to a variable power optical system for an ophthalmic spectacle lens or for an augmented reality device.

More precisely the invention relates to a variable power optical system providing fine adjustment of the optical power depending on variations in the lighting conditions, for example at night, or small evolution of the physiological condition of the wearer, for example due to fatigue.

### BACKGROUND INFORMATION AND PRIOR ART

Numerous documents describe devices and methods for varying the optical power of refractive lenses used in ophthalmic applications.

For example, it is known to use a pair of refractive lenses, or Alvarez lenses, which move relatively to each other. The range of variable optical power is for example from -6D to +3D. However, the optical power is not constant across the surface of the Alvarez lenses and there is no indication on the obtained power.

Liquid lenses using a mobile membrane are also used for some ophthalmic applications. Under a pressure the membrane is deformed to create a refractive lens. The ophthalmic lenses based on a liquid lens have a large area and a variation of power ranging from 0 to +3D.

Other lenses based on a mobile membrane with a small aperture (less than 25mm in diameter) provide a large range of achievable powers, for example from -18D to +18D. Such lenses are mainly used for machine vision, microscopy, medical equipment and photography.

Other lenses are based on the electrowetting technology. Such a lens is formed by the interface between two immiscible liquids, including a conductive liquid. The shape of the interface changes depending on the voltage applied to the conductive liquid. The aperture of such lenses is small (< 6mm) and they cover a large range of powers, for example from -5D to +10D. These lenses are mainly designed for machine vision, microscopy, medical equipment, photography.

However, the liquid lenses or lenses based on electrowetting are not convenient for ophthalmic spectacle glasses due to their limited size.

Some variable power lenses are based on liquid crystal lenses. These lenses are based on liquid crystals (LC) which have variable refractive index depending on the voltage applied. However, nematic type LC lenses are usually polarization dependent. Thus, the optical transmission of nematic LC lenses is usually less than 50%. Therefore, nematic LC lenses are not convenient for an ophthalmic spectacle lens.

Other types of active refractive lenses also exist but are not used or usable for ophthalmic applications.

One object of the present disclosure is to provide an ultra-thin and ultralight lens having a variable power for an ophthalmic spectacle lens or for an augmented reality device.

### SUMMARY OF THE INVENTION

Therefore one object of the invention is to provide an active optical system for an ophthalmic spectacle lens or for an augmented reality device.

The above objects are achieved according to the invention by providing an active optical system comprising : a base lens and a stacked structure onto the base lens, the stacked structure comprising at least one active diffractive phase lens having a variable optical power with a minimum optical power variation of at least 0.25 diopter, the stacked structure having a variable total optical power, said active diffractive phase lens presenting in cross-section a plurality of discrete phase levels and activation means for varying the variable optical power of said at least one active diffractive phase lens, the variable total optical power of the stacked structure varying continuously over a determined optical power range or having at least three different values in the determined optical power range, wherein said stacked structure has a total thickness lower than 1 mm and a size extending at least over a diameter of at least 15 mm and wherein the active optical system has a transmission higher than 50% in a visible spectral range.

The active optical system has in general a thickness of 2 or 3 mm while covering a large range of power variations. For example, for small optical power adjustments, an active optical system including five active diffractive phases lenses has a thickness less than 1mm. In another example, an active optical system including two active diffractive phases lenses has a thickness less than 500µm including the 200 µm thick substrate.

According to a particular and advantageous aspect, said at least one active diffractive phase lens comprises a multi-level phase plate, the multi-level phase plate comprising a structural material having an optical refractive index, said structural material having a multi-level relief surface, and an active material having a variable optical refractive index and comprised between said multi-level relief surface and another surface of the stacked structure, and wherein the activation means are adapted for varying the optical refractive index of the active material between at least a first value equal to the optical refractive index of the structural material and at least a second value different from the first value.

Phase lenses are also called phase zone plate lenses or Fresnel zone plate lenses.

Preferentially electro-active (EO) diffractive phases lenses have an activation based on voltage application. The active materials can be bistable or not. When using a bistable material, the activation can be based on photo-activation, using UV or IR light. However, photoactivation is less easy to use and more complicated to manage for everyday-life eyewear.

Advantageously, the active material comprises a liquid crystal material or an electrochemical material or a conductive polymer.

According to another particular and advantageous aspect, said at least one active diffractive phase lens comprises a pair of multi-level phase plates based on Moiré effect and wherein the activation means are adapted for applying a relative movement between said pair of multi-level phase plates.

Advantageously, said multi-level phase plate has a two-levels relief surface or a four-levels relief surface.

According to another particular and advantageous aspect, said multi-level phase plate forms a Fresnel diffractive phase lens.

According to another particular and advantageous aspect, said at least one active diffractive phase lens is encapsulated between two transparent plates.

In an embodiment, the stacked structure comprises a plurality of active diffractive phase lenses, each active diffractive phase lens having a variable optical power with a minimum optical power variation of at least 0.25 diopter.

According to another particular and advantageous aspect, the at least one active diffractive phase lens and said activation means are adapted for varying the variable optical power of said at least one active diffractive phase lens by one or several steps, or in continuous way.

According to another particular and advantageous aspect, the stacked structure comprises at least one passive diffractive phase lens, said passive diffractive phase lens having a determined optical power comprised between -20 diopters and + 20 diopters.

Advantageously, the at least one active diffractive phase lens is adapted to generate a spherical, and aspherical or a cylindrical optical power.

According to another particular and advantageous aspect, the activation means comprise a manual switch or wherein the activation means comprise a detection system configured to detect variations in the lighting environment or to detect at least one wearer parameter and wherein the activation means are configured for automatically varying the optical power of said at least one active diffractive phase lens depending on the variations in the lighting environment, or, respectively depending on said at least one wearer parameter.

For example, the detection system is adapted to detect the wearer parameter (e.g. speed of eye movement, blinking frequency, eye length variation) and the activation means is adapted to determine the fatigue of the wearer and vary the optical power accordingly.

Preferably, the base lens comprises a refractive lens.

A further object of the invention is to provide an ophthalmic spectacle lens comprising an optical system according to any one of the embodiments disclosed.

A further object of the invention is to provide an augmented reality device comprising an optical system according to any one of the embodiments disclosed.

A further object of the invention is to provide a method for adjusting optical power of an ophthalmic spectacle lens or an augmented reality device, the method comprising the steps of :
- arranging a stacked structure onto a base lens so as to form an active optical system, the stacked structure comprising at least one active diffractive phase lens having a variable optical power with a minimum optical power variation of at least 0.25 diopter, the stacked structure having a variable total optical power, said active diffractive phase lens presenting in cross-section a plurality of discrete phase levels, the stacked structure having a total thickness lower than 1 mm and a size extending at least over a diameter of at least 15 mm, and the active optical system having a transmission higher than 50% in a visible spectral range,
- disposing the active optical system in optical series with the ophthalmic spectacle lens or with the augmented reality device, and
- using activation means for varying the variable optical power of the at least one active diffractive phase lens, so that the variable total optical power of the stacked structure varies continuously over a determined optical power range or over at least three different values in the determined optical power range.

### DETAILED DESCRIPTION OF EXAMPLE(S)

The following description with reference to the accompanying drawings will make it clear what the invention consists of and how it can be achieved. The invention is not limited to the embodiment/s illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 schematically shows in cross-section an active optical system for an ophthalmic spectacle lens or for an augmented reality device according to the present disclosure ;
- Figure 2 schematically shows in front view an exemplary diffractive spherical lens comprising a two-levels or binary phase plate ;
- Figure 3 schematically shows a radial graph of the phase (in π numbers) of the two-level phase plate of figure 2, as a function of the radial position, the diffractive phase lens ;
- Figure 4 schematically shows in front view an exemplary diffractive spherical lens comprising a four-levels phase plate ;
- Figure 5 schematically shows a radial graph of the phase (in π numbers) of the four-levels phase plate of figure 4, as a function of the radial position ;
- Figure 6 schematically shows a method for manufacturing a four-levels phase plate based on photolithography ;
- Figure 7 schematically shows the images formed by a binary phase lens;
- Figure 8 schematically shows the image formed by a four-levels diffractive phase lens ;
- Figure 9 schematically shows in front view an exemplary diffractive cylindrical lens comprising a four-levels phase plate ;
- Figure 10 schematically shows in perspective an exemplary diffractive spherical lens comprising a four-levels phase plate ;
- Figure 11 schematically shows in cross-section an example of an encapsulated diffractive phase lens ;
- Figures 12-13 schematically shows in cross-section a first embodiment of an active diffractive lens based on liquid crystals ;
- Figure 14 schematically shows in cross-section the optical operation of an active diffractive lens in two different states ;
- Figure 15 schematically shows in cross-section an active diffractive lens according to a variant of the first embodiment;
- Figure 16 schematically shows in cross-section an example of an active diffractive lens according to a second embodiment based on diffractive Alvarez lens;
- Figure 17 schematically shows a top view of an example of active diffractive lens according to a third embodiment based on two binary Moiré elements or sector lenses;
- Figure 18 schematically shows a top view of another example of active diffractive lens based on two binary Moiré elements ;
- Figures 19 schematically shows a top view of the two Moiré elements with a relative rotation;
- Figures 20-23 schematically show the operation of an active optical system based on three active diffractive lenses arranged in optical series, each active diffractive lens having a variable optical power and being driven independently.

In the description which follows the drawings are not necessary to scale and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features that are defined relative to a device can be transposed, individually or in combination, to a process.

### Definitions

An active refractive lens is an optical component presenting a variable optical power driven by activation means, wherein optical power variation of the lens is obtained by thickness variations of the lens material, as for example a liquid lens.

Diffractive lenses are based on the principle of the well-known Fresnel lenses. The difference between Fresnel lenses and diffractive lenses is that the areas of material are not defined by constant thickness of material but in terms of areas of constant phase. As used herein, an active diffractive phase lens is an optical component comprising diffracting phase features driven by activation means for presenting a variable optical power, wherein optical power variation of the lens is obtained by phase variations of the diffracting phase features. A diffracting phase feature is generally made of a thin layer of transparent material having, in at least one direction, phase or phase differences of the order of the wavelength (modulo 2π) in the visible range. As disclosed in more details below, the active diffractive phase lens is based for example on liquid crystals, or on an electrochemical material, on conductive polymer, on a diffractive Alvarez lens or on a diffractive Moiré lens or sector lens.

### Optical System and methods of fabrication

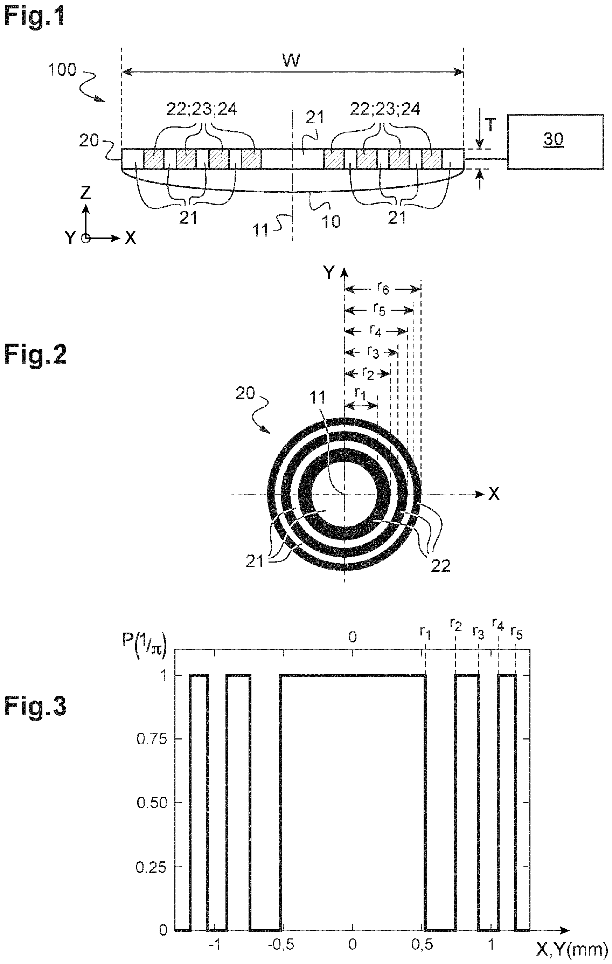

Figure 1 schematically shows an active optical system 100 comprising a base lens 10, a stacked structure comprising at least one active diffractive phase lens 20 and activation means 30 for varying the variable optical power of said at least one active diffractive phase lens 20.

In an application, the base lens 10 comprises an ophthalmic spectacle lens to be included in a pair of spectacle lenses. In another application, the base lens 10 comprises an optical element of an augmented reality device. The base lens 10 comprises for example a spherical lens, cylindrical lens, a multi-focus lens or a progressive lens. Alternatively, the base lens presents a null optical power. The base lens 10 has two opposite faces having defined shapes depending on the optical power of the base lens. In the example illustrated on figure 1, the stacked structure is arranged on a flat surface of the base lens 10. In other examples, the stacked structure is arranged on a concave or convex surface of the base lens 10. The stacked structure is for example formed onto the base lens and has a conformal shape with the underlying surface of the base lens 10. Alternatively, the stacked structure is arranged at a small distance, preferably less than 500 micrometers (µm) from the base lens 10. An optical axis 11 of the active optical system 100 is transverse to surfaces of the base lens 10. The base lens 10 is generally made of a transparent material, such as glass or polymer.

The base lens 10 is generally a refractive lens. Alternatively, the base lens 10 is a diffractive lens having a constant uniform optical power, which enables obtaining an ultrathin active optical system 100.

According to the present disclosure, the stacked structure comprises at least one active diffractive phase lens 20. The active diffractive phase lens 20 has a size W extending at least over a diameter of at least 15 mm, preferably 20 mm, 25 mm, 30 mm, 35 mm, 40 mm, 45 mm, 50 mm, 55 mm, 60 mm, 65 mm, 70 mm, 80 mm. The active diffractive phase lens 20 presents in cross-section a plurality of discrete phase levels forming a multi-level phase plate.

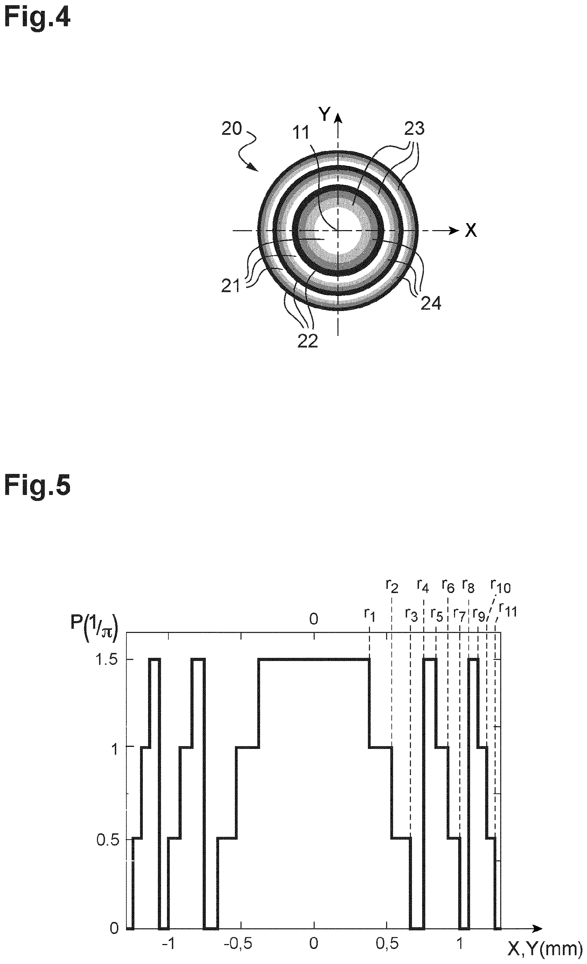

The active diffractive phase lens 20 comprises a first zone 21 presenting a first phase level and at least a second zone 22 presenting a second phase level. In an embodiment disclosed in relation with figures 2-3, the active diffractive phase lens 20 comprised a two-level phase plate. In an embodiment disclosed in relation with figures 4-5, the active diffractive phase lens 20 comprises a four-levels phase plate with a first zone 21 presenting a first phase level, a second zone 22 presenting a second phase level, a third zone 23 presenting a third phase level and a fourth zone 24 presenting a fourth phase level. The different zones 21, 22, 23, 24 are represented in the appended drawings using different colors such as white, grey and black for explanation purpose only. However, the different zones do not present a different color to the eye in the visible range : the material of each zone 21, 22, 23, 24 is transparent in the visible range, so that the interface between the different zones is not visible to the unaided eye. Optionally, the material of the different zones includes filters with classical filtering bandwidths (blue-cut, UV-cut and so on). The material of the different zones is resistant to UV rays, oxygen, humidity and has a long life-time. The respective shapes of the different zones 21, 22, 23, 24 of the active diffractive phase lens 20 are designed so that the active diffractive phase lens 20 provides a determined optical power profile.

Moreover, the activation means 30 are adapted for varying at least one phase level of the multi-level phase plate so as to adjust the optical power of the active diffractive phase lens 20. Depending on the type of the active diffractive phase lens 20, the activation means 30 are based on electrical power/voltage variations applied to electrodes of at least one multi-level phase plate or based on a mechanical movement (rotation and/or translation) between two distinct multi-level phase plates. Also depending on the technology of the multi-level phase plate, the adjustment in phase level may be discrete, for example between two binary values, or between three distinct values or four values, or the adjustment may be continuous over a determined range between a minimum value and a maximum value of phase levels.

In an embodiment, the stacked structure comprises only one active diffractive phase lens 20 driven by the activation means 30. In another embodiment, the stacked structure comprises a plurality of active diffractive phase lenses arranged in optical series on the optical axis of the same base lens, wherein each active diffractive phase lens is driven by the same or by independent activation means 30.

The stacked structure has a total thickness T lower than 1 mm, for example less than 0.9 mm, 0.8 mm, 0.7 mm, 0.6 mm, 0.5mm, 0.4 mm, 0.2 mm, 0.1 mm, 500 µm.

Thus, the stacked structure of the active optical system 100 provides a variable optical power driven by the activation means 30.

According to the present disclosure, each active diffractive phase lens 20 has a variable optical power with a minimum optical power variation of at least 0.25 diopter, or 0.50 diopter or 1 diopter, in absolute value. The optical power variation of each active diffractive phase lens 20 has a sign which is negative or positive. The optical power variation is reversible using the same activation means.

Moreover, the active optical system 100 has a transmission higher than 50% in the visible spectral range, the transmission being here the visual transmission (or luminous transmittance) Tv for ophthalmic lenses as defined in the norm ISO 13666.

Figure 2 shows an example of a binary phase lens and figure 3 shows an example of the two-phase levels of a binary phase lens.

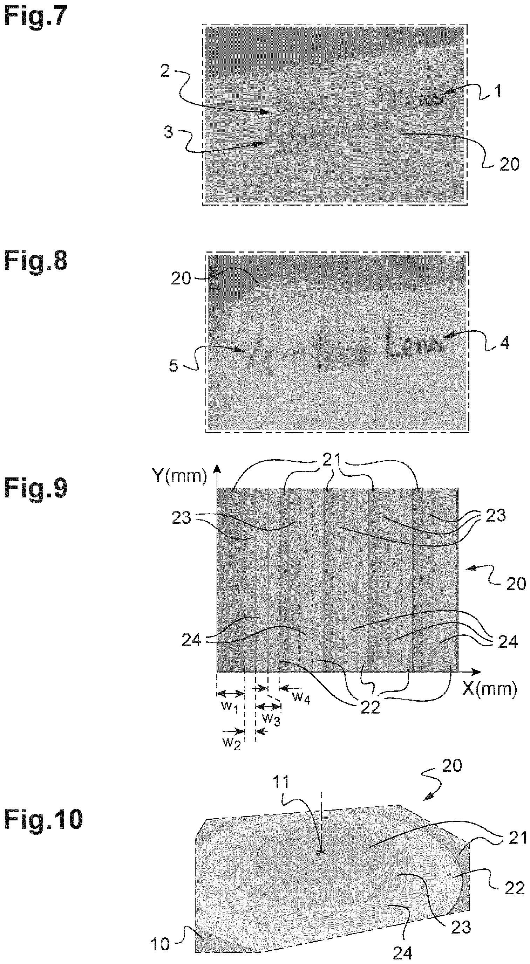

The shape and dimensions of different zones of materials of the diffractive phase lens determines the distribution of optical power: concentric circular rings of certain radii provide a spherical diffractive phase lens (see figures 2 and 4), concentric circular rings with other radii provide an aspherical diffractive phase lens, whereas straight lines provide a cylindrical diffractive phase lens (see figure 9). Other designs of the different zones of materials of the diffractive phase lens enable to manufacture various diffractive phase lenses.

The diffractive phase lens of figure 2 comprises a plurality of concentric circular rings of materials 21 and 22. On figure 2, the central disk and the clear rings, denoted 21, are made of a first material, and the dark rings, denoted 22, are made of a second material. It is outlined that the first material and the second material are transparent in the visible spectral range. The clear and black colors used on figure 2 are only for explanation purpose. The central disk has a radius r₁; the first dark ring has an internal radius r₁ and an external radius r₂ ; the first clear ring has an internal radius r₂ and an external radius r₃ ; the second dark ring has an internal radius r₃ and an external radius r_{4 ;} the second clear ring has an internal radius r₄ and an external radius r₅ and the third dark ring has an internal radius r₅ and an external radius r₆.

Figure 3 shows an example of the phase distribution of a diffractive two-phase level lens. The zones 21 corresponding to the central disk and the clear rings have a phase level equal to π and the zones 22 corresponding to the dark rings have a phase level equal to 0. Of course, the diffractive phase lens may comprise more than three black rings, for example 10 or 20 black rings, or even up to about 5000 rings. The power of the diffractive phase lens is defined by the radii r₁, r₂, r₃, r₄, r₅, r_{6...} of these rings. The width of the rings and their spacing are shorter and shorter as a function of the distance from the center of the lens. In the example of figure 3, the radii are respectively equal to about: r₁ = 0.52 mm; r₂ = 0.74 mm; r₃ = 0.91 mm; r₄ = 1.05 mm ; r₅ = 1.17 mm and r₆≈ 1.28 mm. The diameter of the lens is ≈ 2.6 mm and the optical power of the lens is ≈ 2D.

For a fixed lens diameter, the widths and the spacings, r₂ - r₁, r₃ -r₂, r₄-r₃, r₅-r₄, r₆-r_{5...}, of the rings decrease when the optical power of the lens increases. For a fixed power of the lens, the width and spacing of the rings decrease when the diameter of the diffractive phase lens increases. Thus, it is possible to manufacture a spherical phase lens having an optical power of +1 diopter (+1 D) with a diameter of 12 mm or 6 mm, or having an optical power of +2 diopters (+2 D) with a diameter of 6 mm. Manufacturing a binary diffractive phase lens having a diameter going from about 10 mm or 15 mm to 40 mm and an optical power going from about +1D or +2D up to +10D is relatively easy.

The lens illustrated on figures 2-3 may be a passive or an active diffractive phase lens. For an active diffractive phase lens, the phase levels as illustrated on figure 3 correspond to a first state of the active diffractive phase lens when driven by the activation means. In this first state, the active diffractive phase lens presents a first optical power, denoted P1. More precisely, with a binary lens, the first state provides simultaneously the +P1 and -P1 optical powers. In a second state for example, the activation means modify the phase levels of the clear rings and/or of the dark rings so that the active diffractive phase lens presents a second optical power, different from the first optical power, denoted P2. For example, in the second state, the clear rings 21 have a phase level equal to π and the dark rings 22 have a phase level equal to π, resulting in the second optical power P2 equal to 0. In another example, in the first state, the clear rings 21 have a phase level equal to 0 and the dark rings 22 have a phase level equal to π resulting also in the first optical power P1, and more precisely +P1 and -P1 simultaneously. In still another example, the stacked structure includes two different materials, with an active structural material for one of them, to be able to switch from P1 to P1/2 with a change of phase from π to π/2.

The diffractive phase lens of figures 4-5 comprises a plurality of concentric circular rings forming a four-phase levels lens. The zones 21 corresponding to the central disk and the clear rings have a first phase level ; the zones 23 represented by light grey rings have a second phase level; the zones 24 represented by dark grey rings have a third phase level ; and the zones 22 represented by black rings have a fourth phase level. The first, second, third and fourth phase levels are different from each other. The clear, light grey, dark grey and black colors used on figure 4 are only for explanation purpose, all the areas 21, 22, 23, 24 being transparent. The central disk has a radius r₁; the first light grey ring has an internal radius r₁ and an external radius r₂ ; the first dark grey ring has an internal radius r₂ and an external radius r₃ ; the first black ring has an internal radius r₃ and an external radius r₄ ; the second clear ring has an internal radius r₄ and an external radius r₅, the second light grey ring has an internal radius r₅ and an external radius r₆ ; the second dark grey ring has an internal radius r₆ and an external radius r₇, the second light black ring has an internal radius r₇ and an external radius rs...

Figure 5 shows an example of the phase distribution of a diffractive four-phase level lens corresponding to a first state of the active diffractive phase lens when driven by the activation means. In this first state, the active diffractive phase lens presents a first optical power, denoted P1. The first phase level is equal to 3π/2, the second phase level is equal to π, the third phase level is equal to π/2 and the fourth phase level equal to 0. The total thickness of the four-phase lens is for example about 6 micrometers (µm). In this example the radii are respectively equal to about: r₁ = 0.37 mm; r₂ = 0.52 mm; r₃ = 0.64 mm; r₄ = 0.74 mm ; r₅ = 0.83 mm; r₆ = 0.91 mm ; r₇ = 0.98 mm; r₈ = 1.05 mm ; r₉ = 1.11 mm; r₁₀ = 1.17 mm ; r₁₁ = 1.23 mm. The diameter of the lens is ≈ 2.46 mm and the optical power of the lens is ≈ +2 D.

The lens illustrated on figures 4-5 may be a passive or an active diffractive phase lens. In case of an active diffractive lens, the phase levels represented on figure 5 correspond to a first state when driven by the activation means, the diffractive phase lens having a first optical power P1. In a second state, the activation means 30 modify the phase level of at least one zone 21, 22, 23 and/or 24 so as to modify the optical power of the active diffractive phase lens. For example, in a second state, all the phase levels are equal to 3pi/2, and the active diffractive phase lens has a second optical power P2 equal to 0D. The diffractive phase lens illustrated on figure 4-5 may be a binary phase lens or may have more than two states. For example, in a third state, the phase of the active material defines the active diffractive phase lens so as to provide a third optical power P3 having the opposite sign of P1, i.e. P3 equal to -P1. In this case the active material has a refractive index variation between n2 > n1 (with n1 the index of the structure) for a first state, n2=n1 for the second state, and n2< n1 for the third state. The respective values of the refractive index of the active material in the first state and the third state are linked thanks to the relation between phase, thickness of the structure, and the difference of index between the structure and the active material.

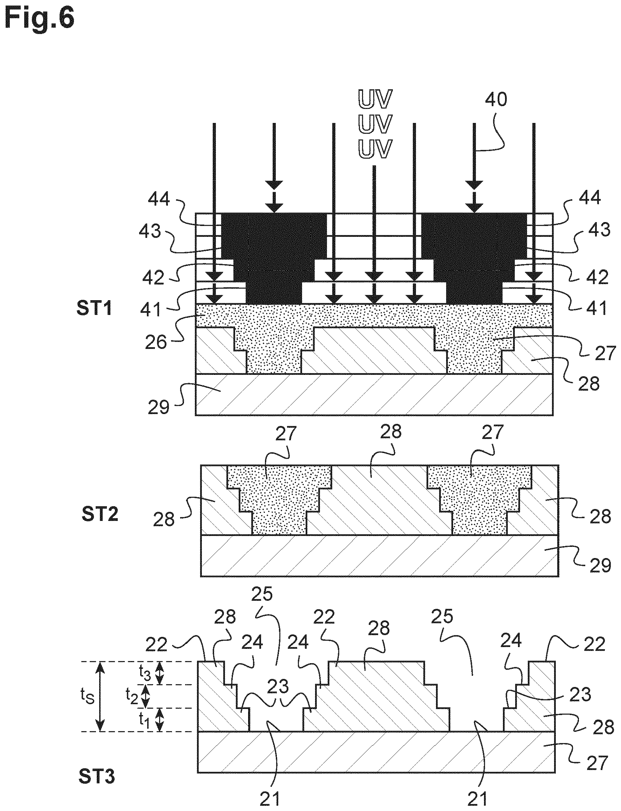

Figure 6 schematically shows a method for manufacturing a multi-level phase plate based on photolithography. The active diffractive lens is formed on a transparent substrate 29. The material of the substrate 29 is for example a flat glass, and is for example known as UV-cut. For example, the photoresist forming the structural material is an epoxy negative of the SU-8 family, for example resist SU-8 TF 6000.5, SU-8 2000.5 or SU-8 6000.5 available commercially and proposed by MicroChem or Kayaku. The photoresist has an optical refractive index at the wavelength of 550 nm equal to 1.595. In first iterative step, denoted ST1, each layer of photoresist material is applied and successively exposed to a UV light beam passing through successive masks. The number of iterations of the first step ST1 depends on the number of levels of the active diffractive phase lens. A two-level structure is obtained with a single layer of resist exposed to a single to UV light beam. A four-levels structure requires three or four layers of resist and as many successive exposures to UV light beam as illustrated on figure 6.

In the example of figure 6, at step ST1, a photoresist material is applied on a surface of the substrate 29, for example by spin-coating in order to form a first photoresist layer with a uniform thickness t₁. The first photoresist layer is exposed to a UV light beam passing through a first mask 41 in order to form exposed and unexposed areas. Next, we remove the resist of the first layer that has not been exposed to UV and is not polymerised. Then, the photoresist material is applied on the surface of the first photoresist layer, for example by spin-coating in order to form a second photoresist layer with a uniform thickness t₂. The second photoresist layer is exposed to a UV light beam passing through a second mask 42 in order to form other exposed and unexposed areas and the unexposed resist is suppressed. Then, the photoresist material is applied on the surface of the second photoresist layer, for example by spin-coating in order to form a third photoresist layer with a uniform thickness t₃. The third photoresist layer is exposed to a UV light beam passing through a third mask 43 in order to form still other exposed and unexposed areas and the unexposed resist is suppressed. This process is repeated as necessary, in order to obtain, at step ST2, a layer of photoresist material comprising some unexposed areas 27 and some exposed areas 28 of various heights. In a third step ST3, the unexposed areas 27 of the photoresist material are selectively removed to form empty areas 25 while the exposed areas 28 of the photoresist material remain on the substrate 29. Thus, it is obtained a multi-level structure comprising zones 21 having no photoresist layer, zones 23 having a photoresist layer of thickness t₁, zones 24 having a photoresist layer of thickness equal to the sum of t₁ and t₂ and zones 22 having a photoresist layer of thickness ts equal to the sum of t₁, t₂ and t₃. The photolithography method is usually achieved in clean room environment, requires development of specific masks 41, 42, 43, and optionally 44, and precise alignment each mask 41, respectively 42, 43 before exposure of each layer of photoresist to UV light beams on the already made structure, which is uneasy, expensive and time-consuming.

The thickness of the multi-level diffractive phase lens is ultra-thin. In an exemplary embodiment, the thickness of each photoresist layer t₁, t₂ and t₃ is equal to about 250 nm. In an example, air is encapsulated in the empty areas 25, the difference of optical refractive index between the empty zones 25 and the exposed areas 28 is equal to 0.595, which enables obtaining four phase levels presenting a phase contrast of 3π/2, i.e. a minimum phase difference between adjacent phase levels of π/2 and a maximum phase difference between phase levels of 3π/2. The thickness ts is equal to about 900 nm, i.e. less than 1 micrometer for a four-levels diffractive phase lens.

Of course, a two-level diffractive phase lens, also called a binary lens, is even thinner. Photolithography enables manufacturing structural features having a thickness of less than 500 nm for a two-level phase lens. For example, the thickness of the two-level structured layer is equal to 460 nm. In an example air is encapsulated in the empty areas 25, the difference of optical refractive index between the empty zones 25 and the exposed areas 28 is equal to 0.595, with a thickness of 460nm, which enables obtaining two phase levels presenting a phase contrast of π.

Other methods can be used for manufacturing a multi-level diffractive phase lens, such as : direct laser writing, 3D printing at nanometric scale, nano-imprinting, etching or holographic methods.

Figure 7 shows an example of a two-level diffractive phase lens, or binary lens, placed in front of a target 1 whereon the source text "Binary Lens" is written. This binary lens 20 has a spherical optical power of +/-10 D and a diameter of 11mm. On figure 7, a first image 2 of the source text is formed with the optical power of - 10D and, simultaneously, a second image 3 of the source text is formed with the optical power of +10D. Indeed, with discretization of the surface of the structured layer on two levels of phase, we can observe simultaneously the positive power +10D and the negative power -10D of the binary lens. An advantage of the binary diffractive phase lens is its ease of manufacture, with just one layer to deposit and one mask to use. However, a binary diffractive phase lens presents simultaneously the positive and negative power of the lens.

Figure 8 shows an example of a four-levels diffractive phase lens placed in front of a source target 4 whereon the text "4-levels Lens" is written. This four-levels diffractive phase lens 20 has a spherical optical power of +10 D and a diameter of about 15 mm. On figure 8, the image 5 of the source text is formed with the optical power of +10D. Indeed, with discretization of the surface of the structured layer on four levels of phase, we can observe only the single optical power, here the positive power +10D. With a multi-level diffractive phase lens presents only one optical power at a time. So multi-level diffractive phase lenses are easier to use and provide exactly optical power for which they are designed. However, a multi-level diffractive phase lens is more complicated to manufacture, because of the difficulties in aligning the masks correctly and precisely on the already made layers. When increasing the number of levels, the efficiency of the lens increases on its main optical power, but the difficulty of manufacture also increases.

Figure 9 shows an example of a diffractive phase lens comprising a four-levels phase plate and having a cylindrical power of +3.5 D along axis X, no optical power along axis Y and a transverse dimension along axis X of about 15 mm. The thickness of each layer of the four-levels phase plate is about 400 nm, the total thickness of the four-levels phase plate being about 1.2 µm. The width of the different layers starting from X=0 mm along axis X in the positive direction is as follows: the zone 21 has a width of about w₁≈240 µm, the zone 23 has a width of about w₂≈110 µm, the zone 24 has a width of about w₃≈85 µm, the zone 23 has a width of about w4≈50 µm. Moreover, the design of the cylindrical diffractive phase lens presents a symmetry along this axis X and the width of the zones are not the same along the axis X. The orientation of the lines of the cylindrical lens determines the axis of the cylindrical lens. Thus, an ultra-thin cylindrical lens is obtained.

Thus, thin diffractive phase lenses can be obtained, each diffractive phase lens having a thickness in the range comprised between 250 nm and a few micrometers, or even less than 1 micrometer, about 500 nm. For example, using liquid crystals as active material, a 4-level lens having a total thickness of about 7µm has been manufactured. The thickness of 7µm is linked to the small contrast of refractive index between liquid crystals and the resist used (SU-8). The diffractive phase lens has diameter comprised between 1mm and about 40 mm. The range of optical power for a two-level or four-levels phase lens extends from about 0.1 diopter to about 10 diopters.

Figure 10 schematically shows in perspective an exemplary diffractive spherical lens comprising a four-levels phase plate. In this example, the diffractive phase lens is arranged directly on the convex surface of a base lens 10. The surface of the ultra-thin diffractive lens 20 is in contact with the convex face of a base lens 10. For example an optical glue is used to attach the diffractive lens 20 on the base lens 10. Thanks to the small thickness of the thin diffractive lens 20, the surface in contact with the base lens is conformal with the convex face of the base lens. This configuration enables adding the optical power of the base lens 10 and the optical power of the diffractive lens 20 while maintaining the overall thickness and weight of the optical system practically unchanged.

However, the surface of the phase-levels of the diffractive lens may be exposed to wear. In order to improve diffractive lens protection, encapsulation of the diffractive phase lens is proposed.

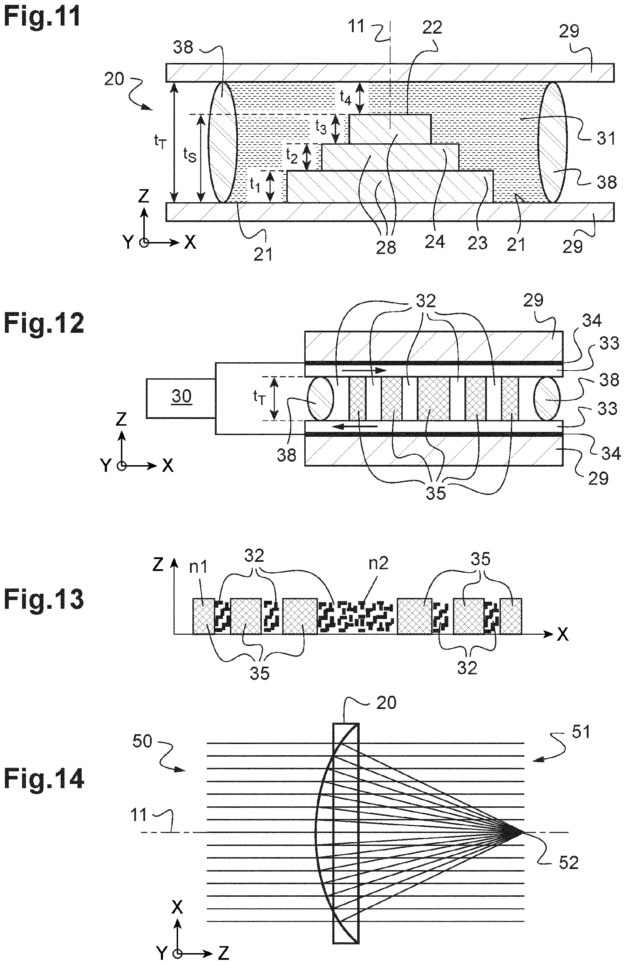

Figure 11 shows a diffractive phase lens 20 wherein the multi-level phase plate is encapsulated between two parallel plates 29. The plates 29 are generally flat. The plates 29 are made of a transparent material, for example Eagle glass XG, which is an alkaline earth boro-aluminosilicate glass, highly transparent in the visible range (T>82% for the whole visible range), and manufactured by Corning. Of course, other glasses can be used. Each plate has a thickness of about 500 µm or 1mm. The plates 29 are separated by a distance denoted t_{T}. The multi-level phase plate is formed on the lower plate 29 and comprises a structure made of three layers forming three levels 23, 24 and 22. The first layer has a thickness t₁, the second layer has a thickness t₂ and the third layer has a thickness t₃. In the example, the layers have the same thickness t₁ is equal to t₂ and equal to t₃ ≈ 450nm, and the total thickness of the three layers is ≈ 1.35 µm. Spacers 38 are arranged so as to determine the distance t_{T} between the two plates 29, which is for example 150 µm, or alternatively 10 µm or 4 µm. The top level 22 of the structure is at a distance t₄ from the upper plate 29. The three-layers structure is made of a first transparent material having an optical refractive index of 1.595 at the wavelength of 550 nm. The space between the two plates 29 is filled by a second material 31, for example a solvent FC-43 which is a perfluorotributylamine (C12F27N). This solvent has the advantages of low toxicity, low refractive index and it is transparent in the visible range. This solvent has an optical refractive index of 1.291 at the wavelength of 595 nm. A sealing material, such as UV glue Vitralit enables sealing the second material between the two plates 29. The glue contains the spacers in glass or polymer. The diameter of the spacers corresponds to the desired distance of the gap for the cell. This configuration enables forming a four-level phase lens wherein the four levels are based on the three layers and the bottom plate that corresponds to the 0 phase. Moreover, the four-level phase lens is encapsulated. The encapsulation simplifies the fabrication of the overall system and protects the multi-level phase lens from mechanical or chemical damages.

The method presented above enables manufacturing a passive or active diffractive phase lens. A passive diffractive phase lens having a fixed optical power can be used to form an ultrathin base lens 10. A combination of diffractive phase lenses arranged in series in a stack enables to form an optical system having a larger optical power.

Moreover, the present disclosure proposes using at least one active diffractive phase lens arranged alone or in a stack on the base substrate 10.

Figures 12-13 show a first embodiment of an active diffractive phase lens based the combination of liquid crystals 32 with a structured phase plate 35 encapsulated between two transparent plates 29, for example glass plates. The opposite faces of the plates 29 comprise a transparent conductive coating 34 forming electrodes for driving electrically the liquid crystals. Preferably, the plates 29 comprise an orientation layer 33 made for example of a polyimide coating, and configured so as to fix a static orientation of the liquid crystals when the voltage applied between the electrodes is null. The distance t_{T} between the two opposite faces of the plates 29 is determined by spacers 38. In an example, the spacers have a diameter of 5 to 10 µm. The phase plate comprises structures 35 of a first material, made for example by photolithography. The structures 35 extend between the two plates and have a thickness slightly larger than t_{T}, so as to enable some liquid crystals to be arranged between the glass plate and the structure in order to obtain another phase level at the top of the structure. As shown in detail on figure 13, a liquid crystal material 32 fills the space delimited by the structures 35 and the two plates. The activation means 30 comprise for example an electrical power source connected to the electrodes formed by the transparent conductive coatings 34. The structures 35 are formed for example by photolithography so as to form a diffractive lens.

The structures 35 have a first optical refractive index n1 which is fixed. The liquid crystal material 32 has a second optical refractive index n2 which is adjustable depending on the voltage applied by the electrical power source. Thus, we obtain an active phase lens wherein the phase difference between the structures 35 and the liquid crystal 32 depends on the voltage applied. As a result, we obtain an active phase lens having an adjustable optical power as a function of the voltage applied. For instance, the activation means 30 are configured to switch the voltage applied between two distinct values enabling to switch the second optical refractive index n2 between two values. This provides an active diffractive phase lens having a variable optical power switchable between two values. For example, the liquid crystal material is E7 (from Merck, Synthon Chemicals) or ZLI-2248 (Licristal). These liquid crystals can be used in nematic configuration, but their effect depends on the light polarisation in this case. To avoid this, these liquid crystals are used in cholesteric configuration by adding a chiral dopant, such as CB15 (from Daken Chemical or Synthon Chemicals, for example).

Alternatively, instead of using liquid crystals as active material, an electrochemical material or a conductive polymer is used. In the same way as with liquid crystals, the refractive index of the electrochemical material, or of the conductive polymer, varies depending on the voltage applied to the electrodes. An electrochemical material, respectively a conductive polymer, can be bistable or not. Alternatively, when using a bistable material, the activation means may comprise a UV or IR light source adapted to induce a photo-activation of the bistable material. For example, the active material used comprises one of the following electrochemical materials: diarylethene (photo and electro active) or viologen families, conductive polymer like polyaniline (used for IR range). The bistability can be achieved thanks to membranes in the cell to limit the exchanges between reduced and oxidised species in the cell. Polymer-stabilized liquid crystals can also be bistable, with an electrical activation. In photoactivation, photochromic materials are bistable materials and present refractive index changes. The phase structure is fabricated by photolithography mainly, but can be fabricated by dry-etching or nano-printing in 3D. The active materials are mainly liquid and need the use of encapsulated structures. An example of active structural material (dieletric elastomer) used in free space optics is disclosed in the publication: "Electrically tunable binary phase Fresnel lens based on a dielectric elastomer actuator", S.Park et al., Optics Express, Vol. 25, No. 20 | 2 Oct 2017.

Figure 14 schematically shows the operation of an active diffractive phase lens 20. In a first state, the phase difference between the two materials is null (modulo 2π), thus the optical power of the phase lens is null : the active diffractive phase lens 20 in the first state is equivalent to a plane plate with parallel faces. A collimated light beam 50 incident on the active diffractive phase lens 20 in the first state forms by transmission a collimated light beam 51. In a second state, the phase difference between the two materials is non null, for example the optical power of the phase lens is positive. The collimated light beam 50 incident on the active diffractive phase lens 20 in the second state forms by transmission a focused light beam 52.

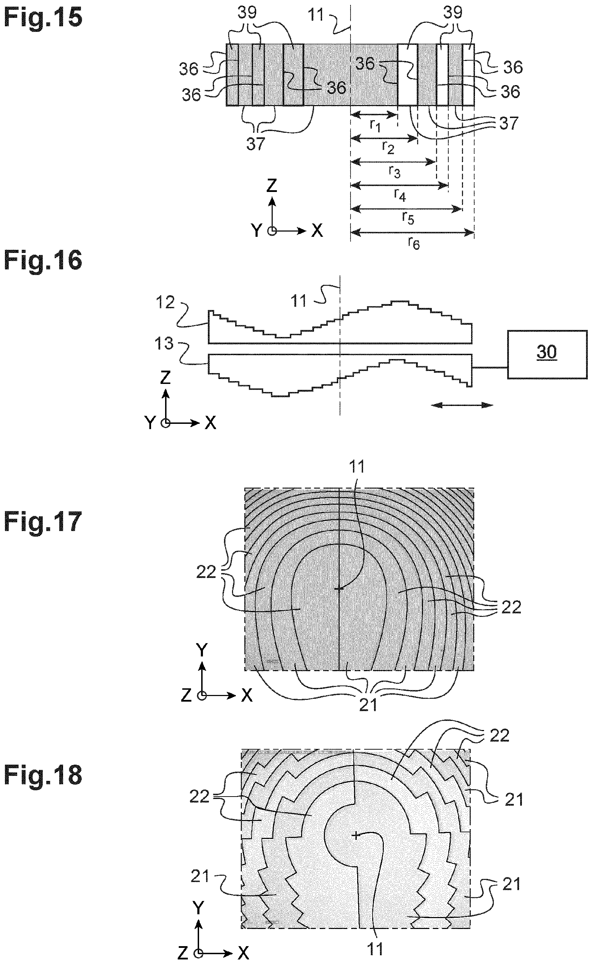

Figure 15 shows in cross-section an active diffractive lens according to a variant of the first embodiment. In this variant, the materials used for forming the phase lens are fluids arranged into separate fluid-tight compartments having the desired shape. The compartments are delimited by transparent walls 36, arranged symmetrically with respect to the optical axis 11. The walls 36 are made for example of IP-Dip (Nanoscribe), which is another type of transparent resist. The walls 36 are arranged at successive distances r₁, r₂, r₃, r₅ and r₆ from the optical axis 11. The walls 36 have a thickness which is negligeable compared to the distances r₁, r₂, r₃, r₅ and r₆ The walls 36 of IP-Dip are made for example using 3D printing at nanometric scale (2-photon process). The walls 36 extend preferably between two parallel plates 29 sealing the compartments. In a first state, represented on the left side of figure 15, all the compartments are all filled with the same first fluid material 37. The first fluid material 37 comprises for example an index matching liquid (from Cargille or Norland) having an optical refractive index equal to 1.556 at the wavelength of 546nm. Since there is no difference in optical refractive index between the different compartments, the diffractive phase lens has a null optical power in the first state, which is the lens off state. In a second state or lens on state, represented on the right side of figure 15, the compartments are alternatively filled with different fluid materials. For example, the compartment located inside the wall at the distance r₁ remains filled with the same first fluid material 37. The compartment located between the walls at the distances r₁ and r₂ is filled with a second fluid material 39, for example air. The compartment located between the walls at the distances r₂ and r₃ is filled with the first fluid material 37. The compartment located between the walls at the distances r₃ and r₄ is filled with the second fluid material 39. The compartment located between the walls at the distances r₄ and r₅ is filled with the first fluid material 37. The compartment located between the walls at the distances r₅ and r₆ is filled with the second fluid material 39. The difference between the optical refractive index n1 of the first fluid material 37 and the optical refractive index n2 of the second fluid material 39 enables forming the diffractive phase lens, which has a non-null optical power, for example -1 D, in the second state. In this variant, the activation means 30 comprise for example a reservoir for the first fluid material 37 and a pump for injecting and/or evacuating the first fluid material fluid 37 in and out of the desired compartments. This variant enables forming an active diffractive lens of the binary lens type in the second state. This example illustrates another example of an active diffractive lens operating as described in relation with figure 14.

Alternatively, instead of walls having a fixed position, the active diffractive lens may comprise liquids separated by a mobile membrane activated by specific activation means. For example, the walls are made of a dielectric elastomers (see for example the publication "Electrically tunable binary phase Fresnel lens based on a dielectric elastomer actuator", S.Park et al., Optics Express, Vol. 25, No. 20 | 2 Oct 2017).

Figure 16 shows an active diffractive phase lens according to a second embodiment based on a diffractive Alvarez lens. A diffractive Alvarez lens comprises two transmissive diffractive phase plates 12 and 13, each diffractive phase plate having a phase profile shaped to approach a two-dimensional cubic profile. More precisely, the phase profile of the active diffractive phase lens is discretized, as for diffractive lenses, and the two elements are flat. The two cubic profiles are made to be the complementary to each other, so that when both plates are placed with their vertices on the optical axis, the induced phase variations cancel out over the whole surface of the Alvarez lens along the directions X and Y. However, if the two plates undergo a relative lateral translation in the XY plane, a phase variation is induced that is the differential of the cubic phase profiles, resulting in a quadratic phase profile, or, in other words, in an optical power having in 2D continuously variable values. The activation means 30 comprise an actuator, such as a manual or motorized translation stage adapted to produce relative movements in the X and/or Y direction between the two plates 12, 13. The relative movement produces circular or cylindrical phase profiles thus inducing respectively circular or cylindrical optical power independently in orthogonal directions.

A diffractive Alvarez lens produces optical power along two orthogonal axes X and Y depending on relative lateral shift of its two diffractive phase plates 12, 13. The diffractive phase plates 12, 13 are fabricated for example by photolithography. For example each phase plates is made of a multiple-level phase plate, for example a 16-level surface-relief profile, and has an operational aperture of 40 mm x 80 mm.

Figures 17-19 shows examples of active diffractive phase lenses according to a third embodiment based on Moiré phase lenses or sector lenses.

A Moiré phase lens comprises two transmissive diffractive phase plates or Moiré elements, each Moiré element comprising a diffractive phase plate having a phase profile shaped according to a 2D Moiré design.

The two Moiré elements of a Moiré phase lens are made to be the complementary to each other, so that when both phase plates (Moiré elements) are placed with their vertices on the optical axis, the induced phase variations cancel out over the whole surface of the Moiré lens along the directions X and Y. However, if the two plates undergo a relative rotation in the XY plane, a phase variation is induced, resulting in an optical power having in 2D variable values in the XY plane. The activation means 30 comprise an actuator, such as a manual or motorized rotation stage adapted to produce relative rotation about the optical axis 11 between the two Moiré elements in the XY plane. The relative rotation produces circular or cylindrical phase profiles thus inducing respectively circular or cylindrical optical power independently in the XY plane.

A Moiré lens produces optical power along two orthogonal axes X and Y depending on the relative rotation between the two diffractive phase plates. The diffractive phase plates are fabricated for example by photolithography. For example each phase plates is made of a two-level phase plate, and has a diameter of at least 10 mm or 15 mm, and up to 30 mm or 40mm.

Figure 17 shows a phase plate according to a first example of a Moiré design. Figure 18 shows another phase plate according to a second example of a Moiré design. In these examples, each phase plate is a two-level phase plate or binary phase plate. The areas 21 present a first optical phase level and the areas 22 present a second optical phase level. The other Moiré for forming a Moiré lens is based on the same design as illustrated on figure 17, respectively figure 18, with the areas of the same shape and dimensions and wherein the areas 21 with the first areas and second areas 22 have been permuted. Thus, when placing the two Moiré elements with the same design and complementary phases aligned, the total phase is uniform across the surface of the Moiré lens. The first Moiré design is the easiest design to fabricate. It has some drawbacks, like the presence of a second phase profile on a part of the Moiré lens. This second part leads to a second power on a small part of the lens. This example of a Moiré design finds application in a two-focals lens. The second Moiré design enables to correct this drawback. The Moiré lens of the second design has a better sharpness than the one based on the first design.

A Moiré lens enables to form an active diffractive lens having a diameter ranging from about 10 mm et 40 mm. The Moiré lens provides continuously variable optical power depending on the relative rotation between the Moiré elements.

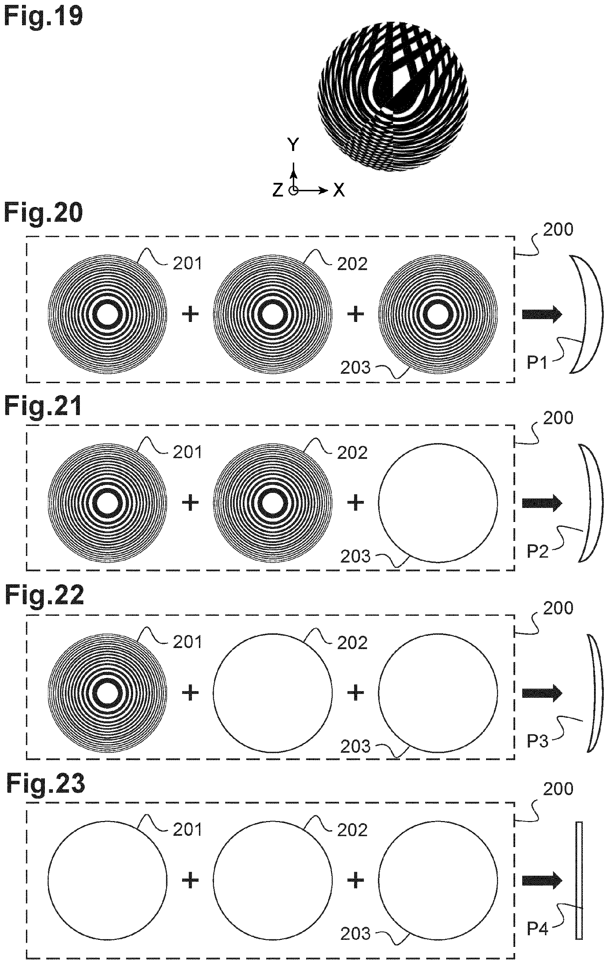

Figure 19 shows an example of a Moiré lens based on two Moiré elements, one of these two Moiré elements being illustrated on figure 17. The two Moiré elements are placed with a relative rotation around their optical axis 11, which are aligned. It is observed a complex resulting phase profile providing corresponding to the optical power of the Moiré lens. For example, when rotated by a relative angle of 0 deg., the Moiré phase lens has a uniform optical power of 0 diopter. When rotated by a relative angle of 45 deg., the Moiré phase lens has an optical power of 2.25 diopter. When rotated by a relative angle of 90 deg., the Moiré phase lens has an optical power of 5.5 diopter.

A Moiré lens based on the design of figure 17 enables to obtain variations of optical power for example of : 0 to 1.25 D, 2.75 D, 5.5 D or 27 D. Each these values corresponds to a design proving a null optical power (0D) for 0 deg, and the second value for a relative rotation of 90deg, for a lens of 10mm of diameter. For example, in the example of the design providing an optical for 0D at 0 deg. and 27D at 90 deg., the optical power of 1.25D is obtained at an angle of 4.1deg, respectively, the optical power of 2.75D is obtained at an angle of 9deg., the optical power of 5.5D is obtained at an angle of 18deg and the optical power of 27D is obtained at an angle of 90deg.

In another example, the Moiré lens based on the design of figure 18 enables to obtain variations of optical power in the following ranges : 0D at 0 deg. and 5.5 D at 90 deg for a Moiré lens of 10mm in diameter, the optical power being of 1.38D for 23deg.

Various types of passive and/or active diffractive phase lenses may be combined to form an active optical system by arranging one, two or multiple diffractive phase lenses in optical series on the optical axis of the base lens. As disclosed above, the base lens 10 itself may be made of a passive diffractive phase lens. The use of a diffractive phase lens having continuously variable power enables to adjust the optical power continuously over a determined range of optical power variation. The use of a plurality of diffractive phase lenses enables to increase the range of optical powers and optical power variations. The combination of refractive and diffractive lenses also enables to decrease or suppress chromatic aberrations.

For example, an active spherical diffractive phase lens and an active cylindrical diffractive phase lens are combined in optical series to form an active optical system having independently variable spherical and cylindrical power.

In another example, binary phase lenses are combined in optical series order to increase the range and the number of discretely adjustable optical power values.

Figures 20-23 illustrate an example of an active optical system 200 comprising a combination of three active diffractive phase lenses arranged in optical series in order to obtain larger optical power variations and/or multiple values of optical powers. The three active diffractive phase lenses are for example four-levels phase lenses having a null power in the off-state and having the same optical power of + 0.50 diopter in the on-state. For example the active material used is a bistable material such as polymer-stabilized cholesteric liquid crystals (PSCLC), that are bistable and unsensitive to light polarization materials and which enable strong economies of energy when driving the active phase lenses. Advantageously, the same activation means are used to drive independently each active diffractive phase lens. On figure 20, all the three active diffractive phase lenses are in the on-state. Thus, their respective optical powers add to each other, resulting in a total optical power P1 of 1.5 D for the active optical system. On figure 21, two out of the three active diffractive phase lenses are in the on-state and the other active diffractive phase lens is in the off-state, and the resulting optical power P2 of the active optical system is equal to 1.0 D. On figure 22, one out of the three active diffractive phase lenses is in the on-state and the two other active diffractive phase lenses are in the off-state, thus the resulting optical power P3 of the active optical system is equal to of 0.5 D. On figure 23, all the three active diffractive phase lenses are in the off-state. Thus, their respective optical powers are all null, thus the resulting optical power P4 of the active optical system is null (0 D).

Thus, using only three binary active diffractive phase lenses enables to obtain an active optical system having an adjustable optical power taking any value among the four optical power values P1, P2, P3 and P4. The optical power is adjusted easily and quickly without removing the optical system from the head and/or sight of the wearer.

The stack of multiple active diffractive lenses has a total thickness which remains small. For example, a stack comprises ten active diffractive lenses, each diffractive lens having a thickness of 690 nm, has a total thickness of 6.9 µm (not taking into account the thickness of the substrate(s) of each lens). The maximum number of the diffractive lenses in a stack is thus limited, on the one hand, by the total thickness of the stack. Moreover, the larger the number of active diffractive lenses in the stack, the more complicated is the activation means for driving the stack.

This configuration enables on-demand optical power adjustment of the active optical system comprising the plurality of active diffractive phase lenses.

The optical power adjustment of the active optical system may be operated manually by the wearer or by an eye care professional (ECP). Alternatively, the optical power adjustment of the active optical system is automatically operated. For instance, the frame of the active optical system comprises sensors useful to drive the activation means of the active diffractive lens(es), such as distance sensors, eye-trackers, accommodation sensors and/or eye length sensors.

The active optical system finds applications for an ophthalmic spectacle lens or for an augmented reality device.

The active optical system finds application for adjusting an ophthalmic lens to the needs for an additional optical power of a wearer. The additional optical power may be due to fatigue, due to changes in the amount of light, for example due to nocturnal myopia, or correspond to temporary changes of correction due to pathology or surgery. Thus, the wearer keeps his previous base lens 10, corresponding for example to a previous prescription, and simply needs to add the thin stacked structure comprising at least one active diffractive phase lens 20 driven by the activation means 30. In another application, the base lens 10 is a monofocal lens configured for example a correcting the vision of a person at a given distance, for example in far vision distance, and the stacked structure comprising at least one active diffractive phase lens 20 driven by the activation means 30 enables to switch or adjust continuously the optical power for the additional vision correction needs of the same person for an other vision distance, for example near vision distance and/or intermediate vision distance. Thus, the person can adjust the correction needs depending on the desired vision distance over the whole surface of the stacked structure. Such an active optical system enables to provide corrected vision as a function of the vision distance without narrowing the field of view of the wearer, contrary to multi-focal or progressive lenses.

The active optical system of the present disclosure finds applications in ophthalmic equipment for on-demand power adjustment, temporary equipment, reusable equipment or in augmented reality eyewear (ARE).

### On-demand power adjustment

For example, the wearer has a prescription of -1.5D. He would like to have an increase of correction of 0.25D at the end of the day because of visual tiredness, or nocturnal myopia. He is not presbyopic. Different configurations are possible for a suitable active optical system comprising :
- a passive refractive base lens with his prescription (-1.5D) and an additional active diffractive lens (on/off) of negative power of 0.25D. The two possible Rx corrections are then : -1.5D and -1.75D ;
- a passive diffractive base lens with his prescription (-1.5D) and an additional active diffractive lens (on/off) of negative power of 0.25D. The two possible Rx corrections are then : -1.5D and -1.75D ;
- a refractive base lens having an optical power of -1.25D and at least two additional active diffractive lenses (on/off) of negative power of 0.25D each. The three possible Rx corrections are: -1.25D, -1.5D and -1.75D;
- an active (on/off) diffractive lens having an optical power of -1D and at least three additional active (on/off) diffractive lenses of negative power of 0.25D each. The eight possible Rx corrections are: 0 D, -0.25D, - 0.5D, -0.75D, -1D, -1.25D, -1.5D, -1.75D; or
- a passive refractive or diffractive base lens of -1D and a diffractive Moiré lens continuously varying between 0D and -1D. The possible Rx corrections are comprised between -1D and -2D with a continuous adjustment.

### Temporary equipment

In another application, the wearer underwent a cataract surgery. His vision is not yet stabilized and he has to wait few months before getting a new ophthalmic equipment. During this period, his ophthalmologist lends him a temporary equipment, that the professional adjusts at his actual vision. The equipment is able to be adapted to the evolution of the wearer's vision by the wearer or thanks to visit to an ECP, optician or ophthalmologist.

For this application, different configurations are possible for a suitable active optical system comprising :
- a refractive base lens with his prescription (on the not operated eye) and an active (on/off) diffractive additional lens of adjustable optical power of +/-0.25D or +/-0.5D for the operated eye. The possible Rx corrections go from 0 to XD, X depending on the targeted correction (in positive or negative power) ;
- a diffractive base lens with his prescription (on the not operated eye) and an additional active (on/off) diffractive lens of adjustable optical power of +/-0.25D or +/-0.5D for the operated eye. The possible Rx corrections go from 0 to XD, X depending on the targeted correction (in positive or negative power);
- a stack of active (on/off) diffractive phase lenses of +/-0.25 or +/-0.5D for both eyes (generalist equipment). The possible Rx corrections go from -XD to +XD, X depending on the targeted correction;
- a refractive base lens with an optical power corresponding to the mean statistic power of the population and an additional active (on/off) diffractive additional lens of +/-0.25D or +/-0.5D or +/-1.0D or +/-2.0D (generalist equipment). For example, with a refractive lens of -2D, the correction can cover the range from -4D to +1D ;
- a diffractive base lens with an optical power corresponding to the mean statistic power of the population and an additional active (on/off) diffractive additional lens of +/-0.25D or +/-0.5D or +/-1.0D or +/-2.0D (generalist equipment). For example, with a refractive lens of -2D, the correction can cover the range from -4D to +1D; or.
- a Moiré lens with adjustable power from 0D to X1D and an additional active (on/off) diffractive additional lens of +/-0.25D or +/-0.5D for the operated eye. The possible Rx corrections go from 0 to X2D, X2 depending on the targeted correction (in positive or negative power).

### Reusable equipment

The wearer decides to have an ophthalmic equipment that will follow him for several years. His prescription can progress or he can need an addition he did not have before and the ophthalmic equipment should be able to propose a variation of power by steps, that can be activated manually by the wearer. When the wearer decides to change his ophthalmic equipment, he can sell it in a second-hand eyewear shop. The ophthalmic equipment is reset and proposed to another wearer.

Different devices are possible with the same combination on both eyes or with different combinations for each eye :
- a refractive base lens with statistic mean power and additional active (on/off) diffractive lens(es) of +/-0.25 and/or +/-0.5D. For example, with a refractive base lens of -1D, the correction can cover the range from - 4D to +1D ;
- a diffractive base lens with statistic mean power and additional active (on/off) diffractive lens(es) of +/-0.25 and/or +/-0.5D. For example, with a diffractive base lens of -1D, the correction can cover the range from -4D to +1D;
- a refractive base lens with statistic mean power and a Moiré lens with an adjustable optical power from -XD to +YD. For example, with a refractive base lens of -1D, the correction can cover the range from - (X+1)D to +(Y-1)D ; or
- a diffractive base lens with a statistic mean power and a Moiré lens with an adjustable optical power from -XD to +YD. For example, with a diffractive base lens of -1D, the correction can cover the range from - (X+1)D to +(Y-1)D.

### Test equipment for ARE devices

A wearer wants to test an augmented reality eyewear. He needs an ophthalmic correction. The device is equipped with an active optical system according to the present disclosure for each eye, the active optical system having variable power lenses that can fit with the needs of prescription of potential buyers. The frame is totally adjustable to fit any wearer. The device can be a generic one, based on a main lens corresponding to the mean power for wearers and a part of adjustable power.

Different devices based on active optical systems are thus possible comprising :
- refractive base lenses with statistic mean power and additional active (on/off) diffractive lenses with an adjustable optical power of +/-0.25 and/or +/-0.5D. For example, with a refractive base lens of -1D, the ophthalmic correction can cover the range from -4D to +1D;
- diffractive base lenses with statistic mean power and additional active (on/off) diffractive lenses with an adjustable optical power of +/-0.25 and/or +/-0.5D. For example, with a diffractive lens of -1D, the ophthalmic correction can cover the range from -4D to +1D.
- refractive base lenses with statistic mean power and a Moiré lens for each eye with an adjustable optical power from -XD to +YD. For example, with a refractive base lens of -1D, the ophthalmic correction can cover the range from -(X+1)D to +(Y-1)D.
- diffractive base lenses with statistic mean power and a Moiré lens lens for each eye with an adjustable optical power from -XD to +YD. For example, with a diffractive base lens of 1D, the ophthalmic correction can cover the range from -(X+1)D to +(Y-1)D.

## Claims

1. Active optical system for an ophthalmic spectacle lens or for an augmented reality device, the active optical system comprising: a base lens and a stacked structure onto the base lens, the stacked structure comprising at least one active diffractive phase lens having a variable optical power with a minimum optical power variation of at least 0.25 diopter, the stacked structure having a variable total optical power, said active diffractive phase lens presenting in cross-section a plurality of discrete phase levels and activation means for varying the variable optical power of said at least one active diffractive phase lens, the variable total optical power of the stacked structure varying continuously over a determined optical power range or having at least three different values in the determined optical power range, wherein said stacked structure has a total thickness lower than 1 mm and a size extending at least over a diameter of at least 15 mm and wherein the active optical system has a transmission higher than 50% in a visible spectral range.

2. Optical system according to claim 1 wherein said at least one active diffractive phase lens comprises a multi-level phase plate, the multi-level phase plate comprising a structural material having an optical refractive index, said structural material having a multi-level relief surface, and an active material having a variable optical refractive index and comprised between said multi-level relief surface and another surface of the stacked structure, and wherein the activation means are adapted for varying the optical refractive index of the active material between at least a first value equal to the optical refractive index of the structural material and at least a second value different from the first value.

3. Optical system according to claim 2 wherein the active material comprises a liquid crystal material or an electrochemical material or a conductive polymer.

4. Optical system according to claim 1 wherein said at least one active diffractive phase lens comprises a pair of multi-level phase plates based on Moiré effect and wherein the activation means are adapted for applying a relative movement between said pair of multi-level phase plates.

5. Optical system according to any one of claims 2 to 4 wherein said multi-level phase plate has a two-levels relief surface or a four-levels relief surface.

6. Optical system according to any one of claims 2 to 5 wherein said multi-level phase plate forms a Fresnel diffractive phase lens.

7. Optical system according to any one of claims 1 to 6 wherein said at least one active diffractive phase lens is encapsulated between two transparent plates.

8. Optical system according to any one of claims 1 to 7 wherein the at least one active diffractive phase lens comprises a plurality of active diffractive phase lenses, each active diffractive phase lens having a variable optical power with a minimum optical power variation of at least 0.25 diopter.

9. Optical system according to any one of claims 1 to 8 wherein the at least one active diffractive phase lens and said activation means are adapted for varying the variable optical power of said at least one active diffractive phase lens by one or several steps, or in continuous way.

10. Optical system according to any one of claims 1 to 9 wherein the stacked structure comprises at least one passive diffractive phase lens, said passive diffractive phase lens having a determined optical power comprised between -20 diopters and + 20 diopters.

11. Optical system according to any one of claims 1 to 10 wherein the activation means comprise a manual switch or wherein the activation means comprise a detection system configured to detect variations in the lighting environment or to detect at least one wearer parameter and wherein the activation means are configured for automatically varying the optical power of said at least one active diffractive phase lens depending on the variations in the lighting environment, or, respectively depending on said at least one wearer parameter.

12. Optical system according to any one of claims 1 to 11 wherein the base lens comprises a refractive lens.

13. Ophthalmic spectacle lens comprising an optical system according to any one of claims 1 to 12.

14. Augmented reality device comprising an optical system according to any one of claims 1 to 12.

15. A method for adjusting optical power of an ophthalmic spectacle lens or an augmented reality device, the method comprising the steps of :
- arranging a stacked structure onto a base lens so as to form an active optical system, the stacked structure comprising at least one active diffractive phase lens having a variable optical power with a minimum optical power variation of at least 0.25 diopter, the stacked structure having a variable total optical power, said active diffractive phase lens presenting in cross-section a plurality of discrete phase levels, the stacked structure having a total thickness lower than 1 mm and a size extending at least over a diameter of at least 15 mm, and the active optical system having a transmission higher than 50% in a visible spectral range,
- disposing the active optical system in optical series with the ophthalmic spectacle lens or with the augmented reality device, and - using activation means for varying the variable optical power of the at least one active diffractive phase lens, so that the variable total optical power of the stacked structure varies continuously over a determined optical power range or over at least three different values in the determined optical power range.
